# EUROPEAN PATENT APPLICATION

(11) **EP 4 105 184 A2**
(43) Date of publication of application: **21.12.2022**
(21) Application number: 22178617.1
(22) Date of filing: 13.06.2022
(51) Int. Cl.: C03B 3/02, F26B 3/16, F26B 17/12, F27D 3/00, F28C 3/14

(54) **EXCHANGE APPARATUS FOR HEAT AND/OR MASS EXCHANGE BETWEEN A GRANULAR MATERIAL AND A GASEOUS CURRENT**

(30) Priority: 15.06.2021 IT 202100015662
(71) Applicant: QD S.r.l., 36072 Chiampo (VI) (IT)
(72) Inventor: FORTI, Marco, 37030 Roncà (Verona) (IT)
(74) Representative: Marchi, Paolo

(57) **Abstract**

An exchange apparatus (1) for heat and/or mass exchange between a granular material and a gaseous current comprises an exchange chamber (10) which is defined between a lateral wall (21) of a tubular body (2) and a central body (3) which is positioned inside the tubular body (2) and extends along a longitudinal central axis (20) of the tubular body (2). A first helical wing (4), which is fixed to the lateral wall (21) and projects towards the central body (3), and a second helical wing (5), which is fixed to the central body (3) and projects towards the lateral wall (21), are positioned in the exchange chamber (10). The two helical wings (4, 5) are inserted between each other and define at least one helical flow path between them for the gaseous current in the exchange chamber (10), putting an inlet (13) in communication with an outlet (14). The first helical wing (4) has an upper face (41) which is sloping down towards the central body (3), and its inner edge (43) is at a distance from the central body (3), so that a first helical passage (45) is defined between the first helical wing (4) and the central body (3) and is delimited underneath by the second helical wing (5). The second helical wing (5) has an upper face (51) which is sloping down towards the lateral wall (21) and its outer edge (53) is at a distance from the lateral wall (21), so that a second helical passage (55) is defined between the second helical wing (5) and the lateral wall (21) and is delimited underneath by the first helical wing (4). The upper face (41) of the first helical wing (4), the first helical passage (45), the upper face (51) of the second helical wing (5) and the second helical passage (55) define a drop path for the granular material in the exchange chamber (10) between a loading opening (11) and an unloading opening (12).

## Description

This invention in general relates to the sector of heat or mass exchange. Specifically it relates to an exchange apparatus for heat and/or mass exchange between a granular material and a gaseous current.

In particular, this invention can be applied as a heat exchanger for pre-heating sands for glass furnaces.

The glass furnaces of current plants have an efficiency which varies from 25% to 40% and depends on the recovery system for pre-heating of the combustion air and on the size of the furnace. The fumes which come out of the recovery system have an enthalpy content still capable of guaranteeing pre-heating of the sands well beyond 600°C.

This value of 600°C should be considered the limit threshold because, just beyond it, the glass cullet, always present in important quantities in the sands to be fed to the furnace, tends to soften and therefore the mixture becomes less mobile, compared with the material in a purely granular state. Consequently, beyond this temperature value there would be clogging problems with obstructions which would prevent the continuous flow of the sands.

There have already been various technological proposals relating to the pre-heating of granular raw materials such as the sands for glass furnaces, but, looking at their spread in production plants, it becomes clear that they have hardly been implemented anywhere, despite the great potential hinted at with this approach.

It should be noticed that in the glass-making sector particular importance is assigned to aspects such as reliability of the apparatuses, dimensions, simplicity of adjustment, management and maintenance of the plant. Moreover, work on an existing furnace must be simple and involve a reasonable investment, that is to say, have a reasonable cost. In this context, the technical purpose which forms the basis of this invention is to provide an exchange apparatus - in particular a heat exchanger - between a granular material and a gaseous current which meets the above-mentioned conditions or which at least offers an alternative to the currently known apparatuses.

In particular, a technical purpose of this invention is to allow a high heat recovery by using a heat exchanger with a structure which is as simple as possible and inexpensive to make and maintain.

The technical purpose and the aims indicated are substantially achieved by an exchange apparatus as described in independent claim 1. Particular embodiments are defined in the corresponding dependent claims.

According to one aspect of this invention, the exchange apparatus comprises an exchange chamber which is defined between a lateral wall of a tubular body and a central body which is positioned inside the tubular body and extends along a longitudinal central axis of the tubular body. Specifically, the longitudinal central axis is a vertical axis.

A first helical wing, which is fixed to the lateral wall and projects towards the central body, and a second helical wing, which is fixed to the central body and projects towards the lateral wall, are positioned in the exchange chamber.

The first helical wing and the second helical wing are inserted between each other and define at least one helical flow path between them for a gaseous current in the exchange chamber, putting an inlet in communication with an outlet.

The first helical wing has an upper face which is sloping down towards the central body (in particular, with an inclination of around 45°) and its inner edge is at a distance from the central body, just as the second helical wing has an upper face which is sloping down towards the lateral wall (in particular, also with an inclination of around 45°) and its outer edge is at a distance from the lateral wall. A first helical passage is defined between the first helical wing and the central body and is delimited underneath by the second helical wing, a second helical passage is defined between the second helical wing and the lateral wall and is delimited underneath by the by the first helical wing.

Each of said helical passages forms a passage for the sands or grains of the granular material, which follow a vertical drop path, jumping from the first wing to the second wing and vice versa. The upper face of the first helical wing, the first helical passage, the upper face of the second helical wing and the second helical passage define a drop path for the granular material in the exchange chamber between a loading opening and an unloading opening.

As regards the gaseous current, specifically the first helical wing and the second helical wing form two helical flow paths, one innermost and one outermost, between which the gaseous current is divided.

Basically, during operation of the exchange apparatus as a heat exchanger, the gaseous current (for example, combustion fumes or hot air) is introduced into the exchange chamber and follows a helical path, exchanging heat with the granular material (for example, sand) which descends in the exchange chamber from the top down by sliding on downward sloping faces of the helical wings and dropping from one helical wing to the other through the helical passages. It should be noticed that the granular material occupies those helical passages and effectively creates a seal which prevents the gaseous current from passing through them, therefore the gaseous current has to follow the helical path into which it has been introduced.

In one specific embodiment, the gaseous current travels along a central duct, from the top down, and is introduced into the helical path through a diffuser placed at the end of said central duct: the gaseous current is channelled through a set of passages towards the inner helical path and towards the outer helical path.

The exchange apparatus according to this invention is useful for achieving high efficiency thanks to the special geometry of the exchange surfaces, in the form of the helical wings. Considering the use as a heat exchanger, the granular material exchanges heat with the gaseous current on one hand through direct contact with the gaseous current itself and on the other hand through the contact with the upper face of the helical wing which supports the granular material, the helical wing in turn directly exchanging heat with the gaseous current through its lower face.

Another particular aspect is that the various jumps by the granular material from one helical wing to the other cause a thorough stirring of the granular material; that adds to the effect caused by the radial flow of the granular material on the helical wings, the radial flow having a cross-section which gradually narrows as it travels from the periphery towards the centre and vice versa widens in the stretch of the path from the centre towards the periphery. This variation in the cross-section for the flow of the grains of granular material forces the grains to be incessantly repositioned, which helps to stir the granular material. This combined action of stirring is useful for preventing the formation of layers at different temperatures (which would form in static conditions) in the granular material and also allows a good level of heat exchanger efficiency to be achieved, in particular when dealing with a granular material with low thermal conductivity such as sand.

Moreover, the exchange apparatus according to this invention is an apparatus with a simple structure and does not have moving parts inside it. Therefore, it can be made with a low cost and does not require frequent maintenance.

In addition to use as a heat exchanger, the exchange apparatus according to this invention may also be applied for mass exchange between the gaseous current and the granular material. For example, it could be used to dry a granular material by means of a hot air current or to sanitise a granular material by means of a gaseous current which contains a disinfecting agent. The structure of the exchange apparatus, the movement of the granular material and the flow of the gaseous current are the same as described above, the difference being that a mass exchange (for example, water or disinfecting agent) takes place at the interface between the granular material and the gaseous current, in addition to or alternatively to the heat exchange.

Another aspect described below relates to a system for adjusting the flow of granular substance coming out of the unloading opening of the exchange apparatus. It is an aspect which, although applied for the exchange apparatus described here, could also be used for other apparatuses. The Applicant reserves the right to protect that aspect in itself, independently of the exchange apparatus which is the subject-matter of this patent application, by a possible divisional patent application or a further patent application. Further features and the advantages of this invention will be more apparent from the detailed description below of several preferred, non-limiting embodiments of an exchange apparatus. Reference will be made to the accompanying drawings, in which:
- Figure 1 shows a perspective view of an embodiment of an exchange apparatus according to this invention;
- Figure 2 shows a side view of the exchange apparatus of Figure 1;
- Figure 3 shows a top view of the exchange apparatus of Figure 1;
- Figure 4 shows a bottom view of the exchange apparatus of Figure 1;
- Figure 5 shows a perspective view, in longitudinal section, of the exchange apparatus of Figure 1;
- Figure 6 shows a first side view, in longitudinal section, of the exchange apparatus of Figure 1;
- Figure 7 shows a second side view, in longitudinal section, of the exchange apparatus of Figure 1;

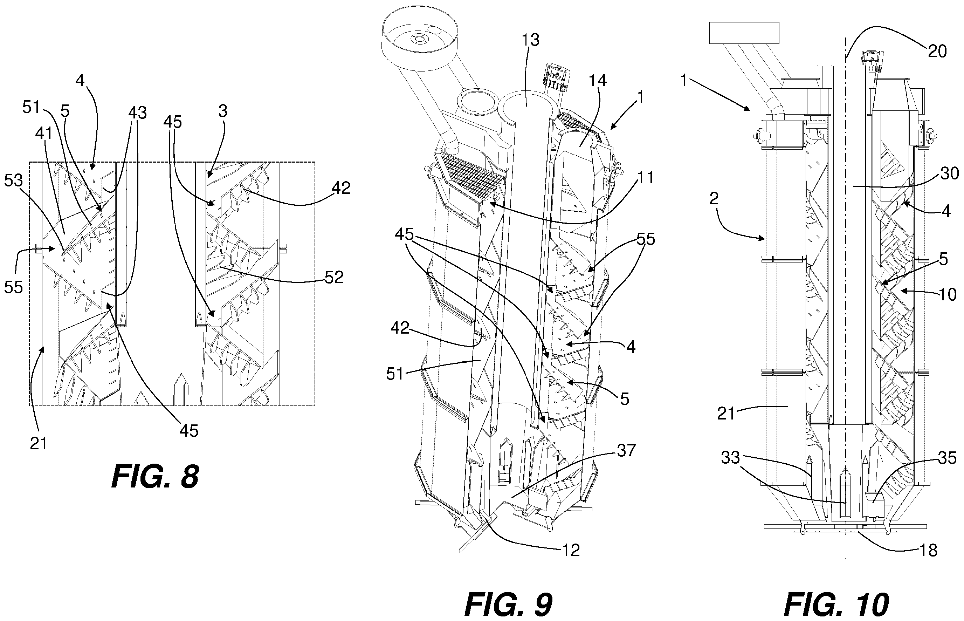

- Figure 8 shows an enlarged view of a detail VIII of the side view in section of Figure 6;
- Figure 9 shows a first perspective view, partly in section, of the exchange apparatus of Figure 1;
- Figure 10 shows a side view of the partial section of Figure 9;

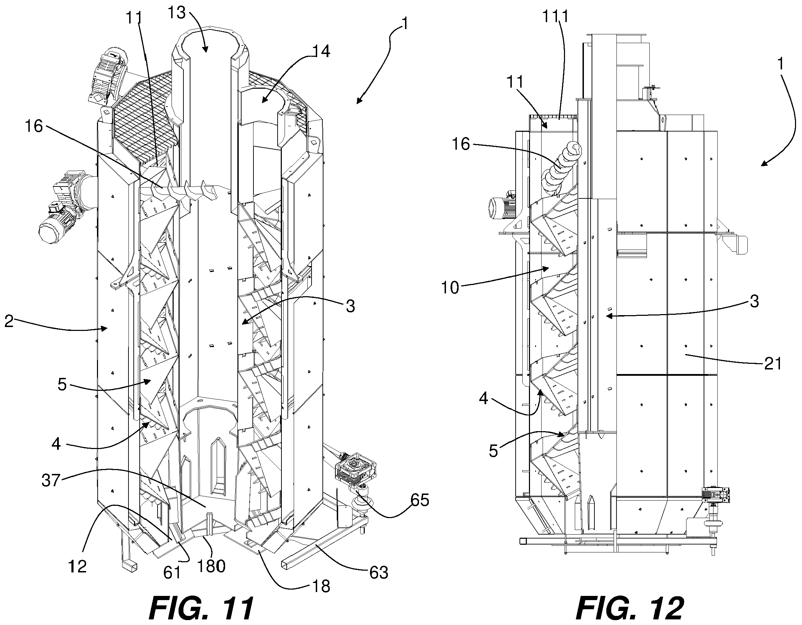

- Figure 11 shows a second perspective view, partly in section, of the exchange apparatus of Figure 1;
- Figure 12 shows a side view of the partial section of Figure 11;

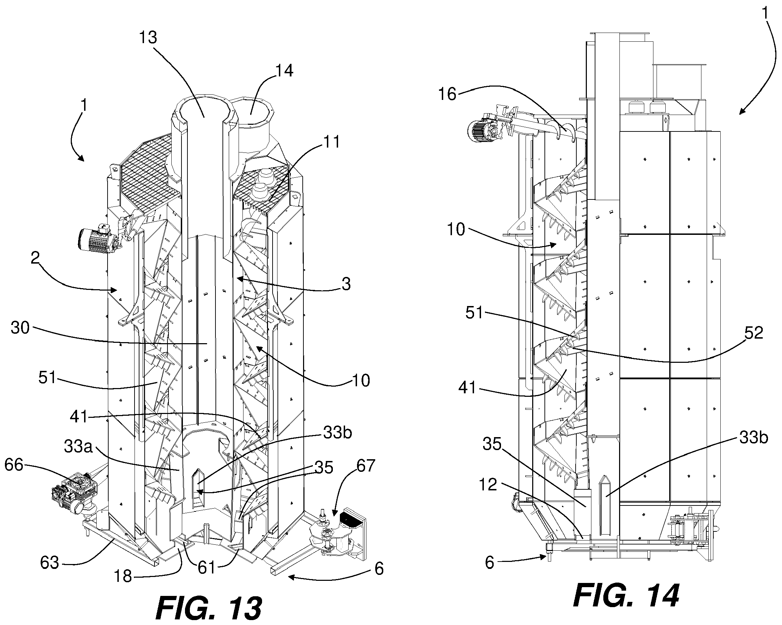

- Figure 13 shows a third perspective view, partly in section, of the exchange apparatus of Figure 1;
- Figure 14 shows a side view of the partial section of Figure 13;
- Figure 15 shows a perspective top view of a set of two internal components of the exchange apparatus of Figure 1;
- Figure 16 shows a perspective bottom view of the set of Figure 15;
- Figure 17 shows a top view of the set of Figure 15;
- Figure 18 shows a bottom view of the set of Figure 15;
- Figure 19 shows a side view of the set of Figure 15;
- Figure 20 shows a side view of an alternative embodiment of the set of Figure 15;
- Figure 21 shows a side view of a first component of the set of Figure 15, in an alternative embodiment;
- Figure 22 shows a side view of a second component of the set of Figure 15, in an alternative embodiment;
- Figure 23 shows a perspective bottom view of the second component of Figure 22;
- Figure 24 shows a side view of a portion of a set formed by the components of Figures 21 to 23;
- Figure 25 shows a detail of the second component of Figure 22, in which only one sector in a detached condition is shown;
- Figure 26 shows a detail in section of the second component of Figure 22, in which only one sector is shown;
- Figure 27 shows an enlarged detail of Figure 26;
- Figures 28 and 29 show, in schematic views in section, operation of the exchange apparatus of Figure 1;

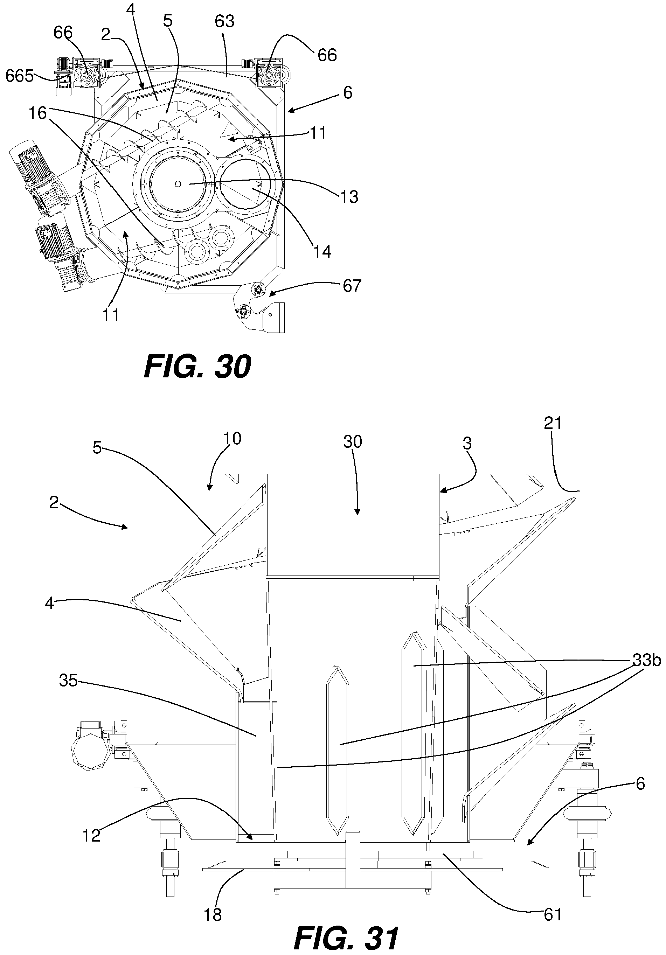

- Figure 30 shows a top view of an alternative embodiment of the exchange apparatus of Figure 1, in which some parts have been removed;
- Figure 31 shows an enlarged view of a detail in section of the exchange apparatus of Figure 1, in which a movement device on the bottom of the exchange apparatus is shown;
- Figure 32 shows a simplified view of the movement device in Figure 31;
- Figures 33 to 40 show operation of the movement device in Figure 31, in which the figures on the left show a top view of the movement device in four movement steps and the figures on the right show the simplified view of Figure 32 in the corresponding operating step.

In the accompanying figures, an embodiment of an exchange apparatus according to this invention is indicated with the reference number 1. In particular, the exchange apparatus 1 is usable for heat exchange between a granular material (indicated with the reference number 9) and a gaseous current, that is to say, the exchange apparatus 1 is a heat exchanger. This is the case which will be considered in this detailed description and therefore reference will be made to a heat exchanger 1. However, it shall be understood that the exchange apparatus - with the same structure and the same components described below - is usable for a mass exchange between the granular material and the gaseous current.

The term "granular material" in general refers to a material made up of a set of solid particles - each with dimensions of between a few microns and several millimetres or even centimetres - which are movable relative to each other. The term "gaseous current" refers to a mass of gas or of vapour (of any substance or mixture of substances) which is moving in a confinable and controllable way.

A specific use of the heat exchanger 1 is in the glass-making sector, in which it is usable as a heat recovery unit for heating sand (or another granular material, for example obtained by grinding glass cullet) by means of a gaseous current which is constituted of combustion fumes coming from a furnace. In this use the granular material is unloaded from the heat exchanger 1 with a temperature higher than the temperature with which it was loaded, whilst the gaseous current cools as it passes in the heat exchanger 1. The heat exchanger 1 may also be applied in other sectors, not necessarily as a heat recovery unit. For example, it could be used to heat and/or to dry a granular material by means of a hot air current or to cool it by means of a cold air current.

The heat exchanger 1 comprises a tubular body 2 having a lateral wall 21 and a longitudinal central axis 20. The lateral wall 21, which in particular is roughly cylindrical, extends between a top 28 and a bottom 29 of the tubular body 2.

Basically, the tubular body 2 is a shell of the heat exchanger 1 and the lateral wall 21 delimits and contains an inner space of the heat exchanger 1. The top 28 and the bottom 29 are the bases of the roughly cylindrical shape.

The heat exchanger 1 in the operating position is positioned vertically, that is to say, with the longitudinal central axis 20 vertical and the top 28 higher up than the bottom 29.

The heat exchanger 1 also comprises a central body 3, which is positioned inside the tubular body 2 and which extends along the longitudinal central axis 20. Basically, the central body 3 is an elongate body which is coaxial with the lateral wall 21 and in particular is roughly cylindrical.

Inside the tubular body 2 there is an exchange chamber 10 which is defined between the lateral wall 21 and the central body 3. In practice, that exchange chamber 10 has a roughly cylindrical shell shape and in it, as explained in more detail below, the heat and/or mass transfer between the granular material and the gaseous current takes place. Since this detailed description relates to a heat exchanger, hereinafter that exchange chamber is indicated as the heat exchange chamber 10.

The heat exchanger 1 also comprises: one or more loading openings 11 for loading the granular material into the heat exchange chamber 10; an unloading opening 12 for unloading the granular material from the heat exchange chamber 10; an inlet 13 for letting the gaseous current into the tubular body 2; one or more outlets 14 for letting the gaseous current out of the tubular body 2.

The loading opening or openings 11 are located at the top 28 of the tubular body 2 and in particular lead directly into the heat exchange chamber 10 below. The loading opening or openings 11 are protected by a grille 111. In the embodiment illustrated there are two loading openings 11 which are on opposite sides relative to the central axis 20, however there may only be one loading opening 11 present. A feeder, in particular a hopper 15, feeds the granular material to the loading opening 11. A motor-driven screw feeder 16 - in particular one motor-driven screw feeder 16 for each loading opening 11 - distributes the granular material fed.

The unloading opening 12 is located at the bottom 29 of the tubular body 2. The movement of the granular material in the heat exchange chamber 10 from the loading opening 11 to the unloading opening 12 takes place under gravity, as will be explained in more detail below.

A first helical wing 4 and a second helical wing 5 are positioned in the heat exchange chamber 10 and extend around the longitudinal central axis 20 between the top 28 and the bottom 29 of the tubular body 2. The first helical wing 4 is more outer than the second helical wing 5, which in turn is more inner than the first helical wing 4.

It should be noticed that, in this description and with reference to the helical wings, "outer" means nearer to the lateral wall 21 and "inner" means nearer to the central body 3. In any case they are parts which are inside the heat exchange chamber 10.

The first helical wing 4 and the second helical wing 5 are inserted between each other; they have the same pitch and are offset from each other. The first helical wing 4 and the second helical wing 5 define at least one helical flow path between them for the gaseous current in the exchange chamber 10; that helical path puts the inlet 13 in communication with the outlet 14.

Specifically, the two helical wings 4, 5 define two helical flow paths: an outermost helical path, which is externally delimited by the lateral wall 21, and an innermost helical path, which is internally delimited by the central body 3.

Moreover the two helical wings 4, 5 are offset from each other by half a step.

The first helical wing 4 is fixed to the lateral wall 21 of the tubular body 2 and projects towards the central body 3, whilst the second helical wing 5 is fixed to the central body 3 and projects towards the lateral wall 21.

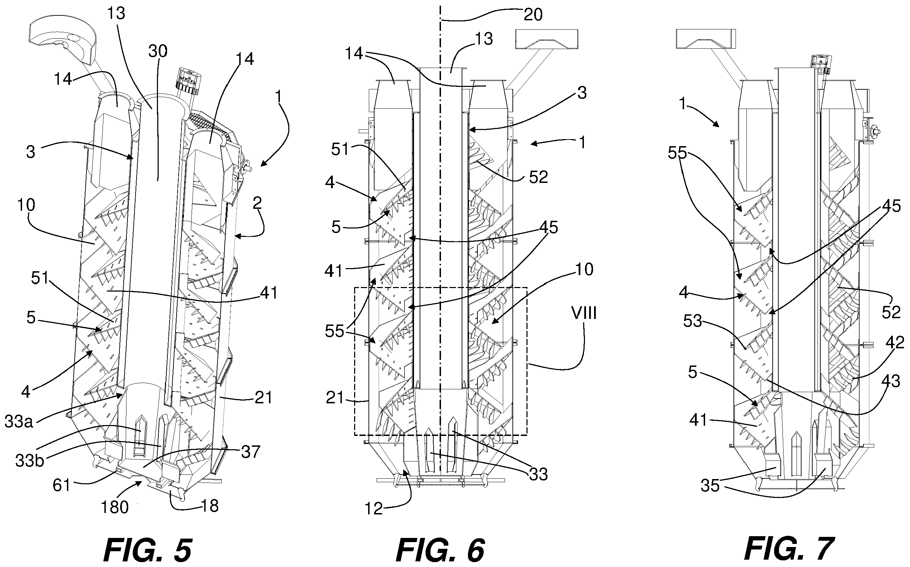

The first helical wing 4 has an upper face 41 which is directed towards the top 28 of the tubular body 2 and is sloping down towards the central body 3: in a longitudinal section view, as in Figures 5 to 7, it can be seen how the upper face 41 is inclined downwards away from the lateral wall 21. Moreover an inner edge 43 of the first helical wing 4, that is to say, the edge furthest from the lateral wall 21, is at a distance from the central body 3, so that a first helical passage 45 is defined between the first helical wing 4 and the central body 3. Essentially, the first helical wing 4 is positioned projecting cantilever-style from the lateral wall 21 towards the longitudinal central axis 20 and the central body 3, but without arriving at the latter and therefore leaving the first helical passage 45, below which the second helical wing 5 is located which delimits the first helical passage 45 underneath.

Similarly, the second helical wing 5 has an upper face 51 which is directed towards the top 28 of the tubular body 2 and is sloping down towards the lateral wall 21: in the longitudinal section view it can be seen how the upper face 51 is inclined downwards away from the central body 3. An outer edge 53 of the second helical wing 5, that is to say, the edge furthest from the central body 3, is at a distance from the lateral wall 21, so that a second helical passage 55 is defined between the second helical wing 5 and the lateral wall 21. Essentially, the second helical wing 5 is positioned projecting cantilever-style from the central body 3 away from the longitudinal central axis 20 and towards the lateral wall 21, but without arriving at the latter and therefore leaving the second helical passage 55, below which the first helical wing 4 is located which delimits the second helical passage 55 underneath. It should be noticed that the first helical wing 4 and the second helical wing 5 do not touch each other.

In practice, since the first helical wing 4 and the second helical wing 5 are inserted between each other, in the heat exchange chamber 10 the first helical wing 4 and the second helical wing 5 are superposed, but not completely and therefore they leave said helical passages 45, 55 in a region inside the first helical wing 4 and in a region outside the second helical wing 5.

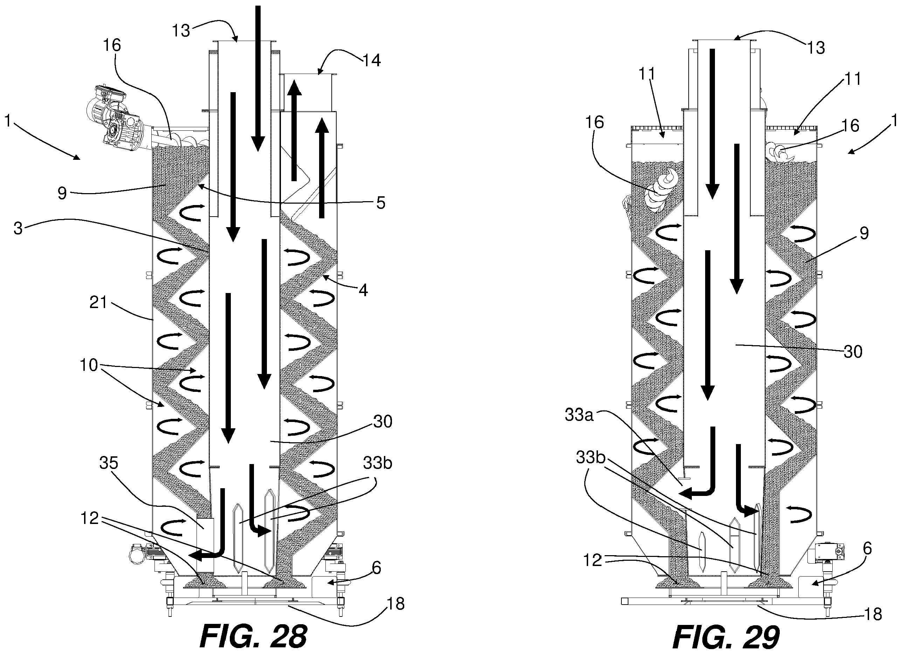

The upper face 41 of the first helical wing 4, the first helical passage 45, the upper face 51 of the second helical wing 5 and the second helical passage 55 define a drop path for the granular material 9 in the heat exchange chamber 10 between the loading opening 11 and the unloading opening 12: the granular material introduced through the loading opening 11 drops onto the upper face 51 of the second helical wing 5 (where it is partly distributed by the motor-driven screw feeder 16) and under gravity slides towards the periphery as far as the second helical passage 55, where it drops onto the upper face 41 of the first helical wing 4 below. Under gravity, the granular material slides towards the central axis 20 as far as the first helical passage 45, where it drops onto the upper face 51 of the second helical wing 5 below. As shown in Figures 28 and 29, that is repeated until the unloading opening 12 is reached. Essentially, the granular material 9 slides under gravity from the top down, continuously falling from one helical wing to the other and does not follow the helical trend of the helical wings.

In particular it should be noticed that the helical wings 4, 5 have a radial inclination (relative to the central longitudinal axis 20) which is greater than the circumferential inclination, therefore the radial component of the force of gravity is greater than the tangential component of the force of gravity. Consequently, the movement of the granular material 9 on the helical wings 4, 5 towards the first helical passage 45 or towards the second helical passage 55 is preferred relative to the descending movement along the helical path defined by the respective upper face 41, 51. For example, the radial inclination is around 45°.

Moreover, during use of the heat exchanger 1 the granular material 9 occupies the first helical passage 45 and the second helical passage 55 - as schematically shown in Figures 28 and 29 - and effectively "seals" those passages and prevents the gaseous current from passing through them. Therefore, the gaseous current does not pass between the outermost helical path and the innermost helical path.

With this particular geometry, the granular material 9 does not completely fill the heat exchange chamber 10 but is dynamically distributed as shown in Figures 28 and 29, leaving empty spaces below the helical wings 4, 5: the gaseous current travels through those empty spaces. The filling of the spaces in the heat exchanger 1 is irrespective of the flow rate of the granular material 9. For correct operation of the heat exchanger 1 it is necessary to keep the load level within a narrow range close to saturation, so as to ensure a sufficient pneumatic seal in the infeed zone. Specifically, the load level is adjusted by acting on the unloading of the granular material 9, as described below. Therefore, the gaseous current passes through the heat exchange chamber 10 by following a helical path. In particular, the gaseous current is divided into two parts: a first part travels along the outermost helical path which is delimited by the upper face 51 of the second helical wing 5, by the lower face 42 of the first helical wing 4 and by the lateral wall 21; a second part travels along the innermost helical path which is delimited by the upper face 41 of the first helical wing 4, by the lower face 52 of the second helical wing 5 and by the central body 3.

The heat exchange between the gaseous current and the granular material 9 occurs both directly, since the gaseous current brushes against the surface of the layer of granular material 9 which is located on the upper faces 41, 51 of the helical wings 4, 5, and indirectly, since the gaseous current brushes against the lower faces 42, 52 of the helical wings 4, 5 which exchange heat by conduction with the granular material 9. Essentially, the granular material 9 exchanges heat underneath and on the top through large surface areas, since the granular material is distributed as layers which cover both of the helical wings 4, 5. That allows high efficiency heat exchange.

Moreover, the movement of the granular material 9 as described above leads to effective stirring of the granular material with each change from the first helical wing 4 to the second helical wing 5, and vice versa, thanks to the granular material dropping through the helical passages 45, 55. A further stirring is due to the fact that, in the radial component of the path of the granular material, the cross-section occupied gradually narrows in the stretch towards the central body 3 - due to the reduction of the radius - and it gradually expands when directed towards the lateral wall 21 - for the opposite reason. This change in the cross-section occupied forces the grains of granular material to be incessantly repositioned.

This double way of stirring favours transmission of the heat in the entire mass of the moving granular material, continuously breaking temperature gradients in the layer of granular material and therefore favouring diffusion of the heat through the granular material which, in itself, may have a low thermal conductivity coefficient.

In order to increase the above-mentioned indirect heat exchange, the lower face 42 of the first helical wing 4 is provided with heat-exchange fins 47 and the lower face 52 of the second helical wing 5 is also provided with heat-exchange fins 57. For example, the presence of the fins 47, 57 allows doubling of the surface area of the helical wings which is in contact with the gaseous current.

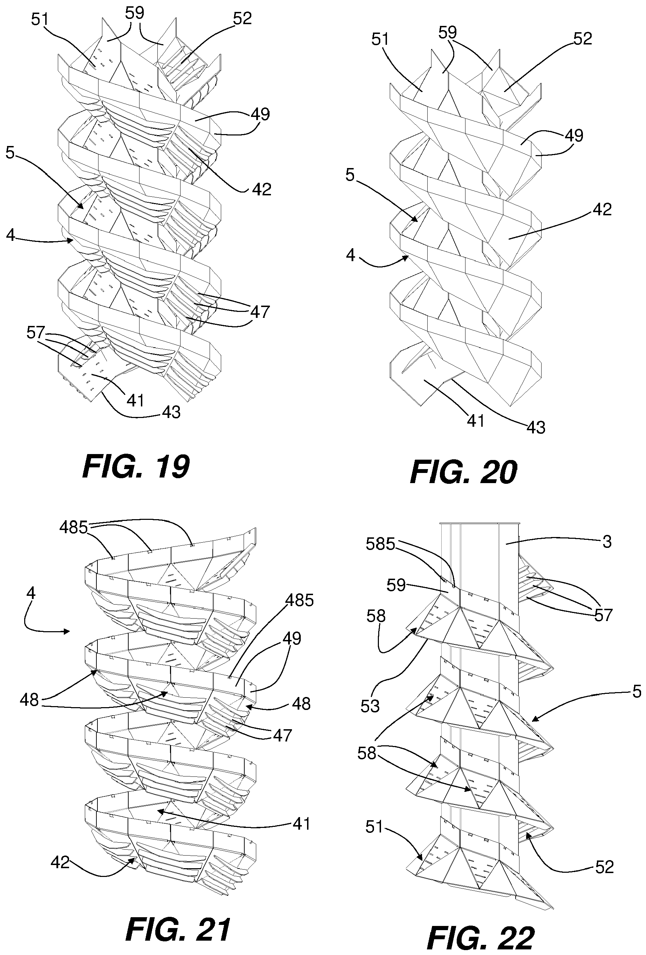

If necessary, only one of those lower surfaces 42, 52 could be provided with heat-exchange fins whilst the other could be smooth, or both of the lower faces 42, 52 are without heat-exchange fins as shown in the embodiment of Figure 20.

In contrast, the upper faces 41, 51 of the helical wings 4, 5 are smooth so as not to obstruct the movement of the granular material on them.

In the embodiment illustrated, the central body 3 has an inner cavity 30 which is in communication with the inlet 13 for the gaseous current. Moreover, the central body 3 has at least one transit opening 33 which puts the inner cavity 30 in communication with the heat exchange chamber 10. Therefore, the gaseous current is introduced into the heat exchange chamber 10 through the central body 3.

Specifically, the central body 3 is a tube. The inlet 13, which in practice is one end of the tube-shaped central body 3, is located at one end of the tubular body 2 - in particular at the top 28 - and the at least one transit opening 33 is at the opposite end of the tubular body 2 - in particular near the bottom 29. The gaseous current flows inside the central body 3, along the inner cavity 30, before entering the heat exchange chamber 10. As shown in the figures, the outlet 14 is at the same end as the inlet 13, in particular they are both at the top 28 of the tubular body 2. That is useful for facilitating connection of the heat exchanger 1 with the pipes of the gaseous current line.

The position of the inlet 13 and of the outlet 14 at the top 28 of the tubular body 2 is useful for leaving free the bottom 29 where, in contrast, the granular material unloading opening is located. Moreover, that position is advantageous for counterflow operation of the heat exchanger 1, in whose heat exchange chamber 10 the granular material 9 moves from the top down and the gaseous current flows from the bottom up.

The two parts into which the gaseous current is divided (that is to say, the innermost helical path and the outermost helical path) come together again in a plenum at the top, which is provided with the outlet 14. Alternatively, each helical path is connected to a respective outlet 14.

In the embodiment illustrated there are a plurality of transit openings 33 which are distributed along the circumference of the central body 3. Some of them (in particular, two transit openings indicated with 33a in some figures) open directly onto the heat exchange chamber 10 and introduce the gaseous current into the innermost helical path, whilst others (in particular, six transit openings indicated with 33b in some figures) are connected to the heat exchange chamber 10 by short ducts 35 and introduce the gaseous current into the outermost helical path. The ducts 35 pass through the granular material unloading region.

The transit openings 33 have different and progressive heights so as to make maximum use of the heights allowed by the geometry of the first helical wing 4; the respective ducts 35 are narrow (that is to say, their height is greater than their width) so as to obstruct as little as possible the transit section for the granular material 9 towards the unloading opening 12. In fact, it should be noticed that those ducts 35 pass through an annular region which ends with the unloading opening 12 and moreover the ducts 35 have a sloping top to prevent the granular material from building up on them.

Whilst the upper end of the tube-shaped central body 3 is open and is the inlet 13, the lower end of the central body 3 is closed by a plate 37, so that the only possible way out for the gaseous current is through the transit openings 33, towards the outermost helical path and towards the innermost helical path.

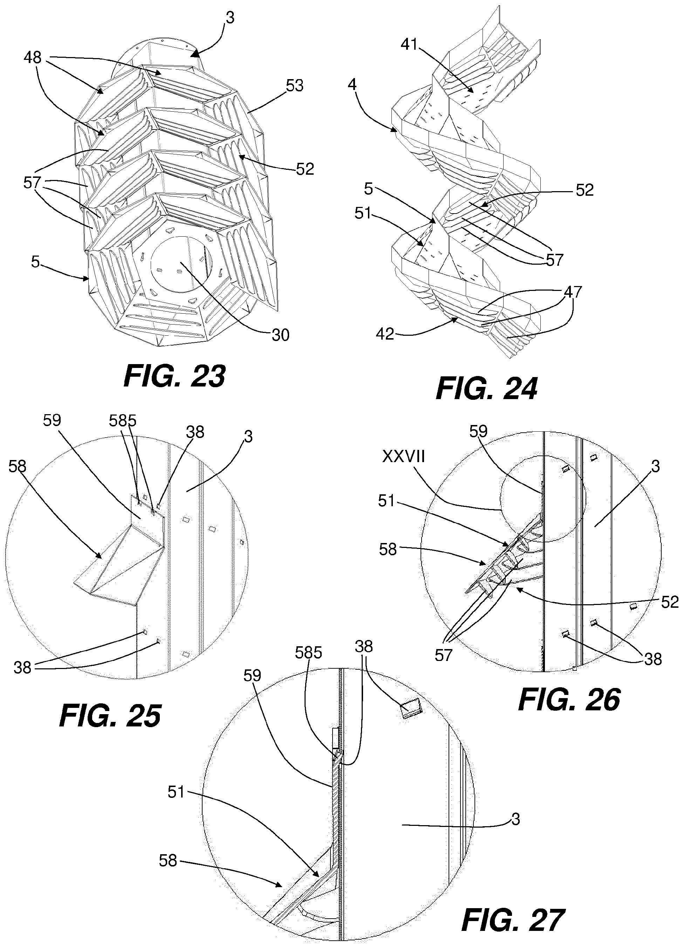

Regarding the helical wings, in one embodiment shown in Figures 21 to 24 they have a helical shape with a single start. Figure 21 shows the first helical wing 4 itself, Figure 22 shows the second helical wing 5 on the central body 3, Figures 23 and 24 show the two helical wings 4, 5 inserted between each other, as they are in the operating heat exchanger 1. It should be noticed that the two helical wings 4, 5 are made before the central body 3 is inserted in the tubular body 2. Their positioning relative to each other is then obtained by "screwing" the central body 3 into the tubular body 2.

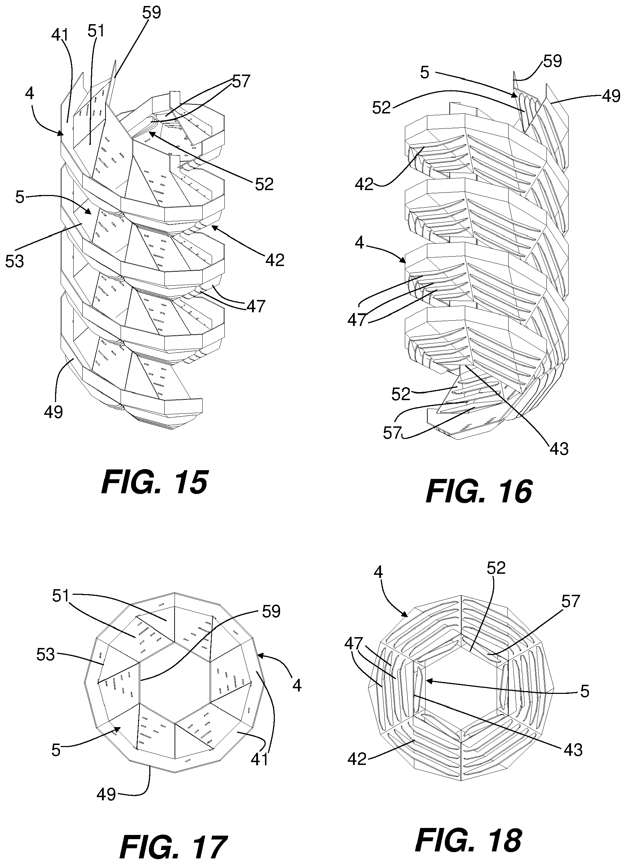

In contrast, in one embodiment shown in Figures 15 to 20, the first helical wing 4 and the second helical wing 5 have a helical shape with two starts. Therefore, each of them defines two helices which are angularly offset from each other by 180°. In the case of helical wings with two starts, the gaseous current is divided into two outer helical paths and into two inner helical paths.

In this case it is advantageous for the heat exchanger 1 to be provided with two outlets 14, each in communication with the helical paths of the respective start. As shown in the figures, the two outlets 14 are on opposite sides of the centrally positioned inlet 13; the outlets 14 and the inlet 13 are interposed between the two loading openings 11. The loading openings 11 also each lead to a respective start.

In alternative embodiments, the first helical wing 4 and the second helical wing 5 have a helical shape with more than two starts. The number of outer helical paths is equal to the number of starts, as is the number of inner helical paths. The increase in the number of starts is useful for division of the gaseous current over multiple paths in parallel and a reduction of the length of the path of the gaseous current. With two starts the pitch is double, therefore the flow path for the gaseous current has a halved length and a doubled cross-section, giving a significant reduction in pressure drop, the overall flow rate being equal.

In the embodiment illustrated, the first helical wing 4 is formed by a plurality of sectors 48 which are positioned one after another and which are fixed to the lateral wall 21. Each sector 48 is a shaped piece obtained from a sheet and folded, with a few simple folds; if necessary the sector 48 is provided with fins 47 which are made separately and fixed by slotting into corresponding seats in the piece of sheet which forms the sector 48 and then welded on both sides to ensure maximum heat exchange. The sectors 48 are made in such a way that, once fitted on the lateral wall 21, they are joined to each other forming a substantially continuous first face 41.

Specifically, the sectors 48 are fitted on the lateral wall 21 of the tubular body 2 by first positioning the sectors 48 in respective slots (the sectors 48 are provided with tabs 485, for example two for each sector 48, which are hooked in corresponding slits made in the lateral wall 21) and then making a set of stitch welds between the sectors 48 and the lateral wall 21 and also between the sectors 48 themselves. A similar method is also usable for fixing the fins 47 to the respective sector 48.

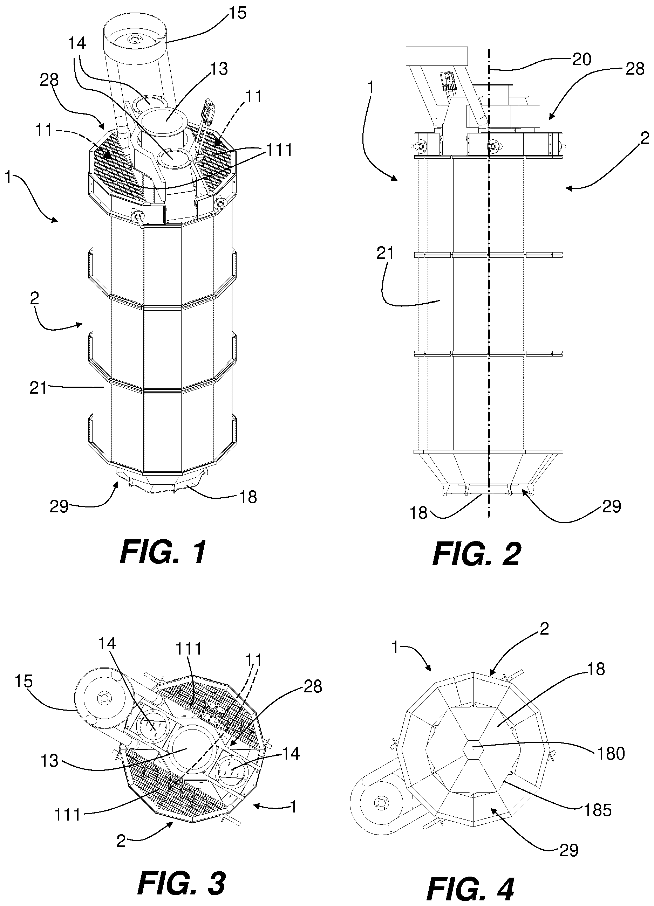

In the embodiment illustrated, the inner surface of the lateral wall 21, that is to say, the surface facing the heat exchange chamber 10, is prismatic and, in cross-section, has a polygonal shape comprising a plurality of sides. For example, as shown in Figures 3 and 4, it is a dodecahedron. Each sector 48 of the first helical wing 4 has a folded flap 49 (which is folded relative to the part which forms the first face 41) which is fitted on a respective side of the inner surface of the tubular body 2. That folded flap 49 is provided with a tab 485 and rests on the lateral wall 21. In particular each sector 48 has two folded flaps 49 side by side and engages with two sides of the tubular body 2.

The second helical wing 5 too is made in a similar way: it is formed by a plurality of sectors 58 which are positioned one after another and are fixed to an outer surface of the central body 3, that is to say, to the surface facing the heat exchange chamber 10. Each sector 58 is a shaped piece obtained from a sheet and folded, with a few simple folds; if necessary the sector 58 is provided with fins 57 which are made separately and fixed by slotting into corresponding seats in the piece of sheet which forms the sector 58 and then welded to ensure maximum heat exchange.

The sectors 58 are made in such a way that, once fitted on the central body 3, they are joined to each other forming a substantially continuous first face 51.

Fitting of the sectors 58 on the central body 3 can also be performed by slotting them into place, using tabs 585 (for example, two for each sector 58) which are hooked in corresponding slits 38 made in the central body 3. Then a set of stitch welds is made between the sectors 58 and the central body 3 and also between the sectors 58 themselves. The fins 57 are fixable to the respective sector 58 in a similar way.

The outer surface of the central body 3, that is to say, the surface facing the heat exchange chamber 10, is prismatic and, in cross-section, has a polygonal shape comprising a plurality of sides. For example, it is a hexagon. Each sector 58 of the second helical wing 5 has a folded flap 59 - provided with tabs 585 - which is fitted on a respective side of the outer surface of the central body 3, resting on the outer surface. The flap 59 is folded relative to the part which forms the first face 51. Figures 25 to 27 show that in more detail. Figure 25 shows a sector 58 detached from the central body 3, whilst Figures 26 and 27 show the sector 58 fixed and welded to the central body 3. Basically, the helical wings 4, 5 are composed of modular elements.

This way of making them using sectors is useful because it allows the helical wings to be obtained in a simple and precise way, also starting from a flat element, such as a sheet, which can be cut and shaped using well-known technologies. The way of fixing described above is useful because it allows the helical wings to be made rapidly and also any damaged parts can easily be substituted.

If necessary, only one of either the first helical wing 4 or the second helical wing 5 is made using sectors as described above or even both are made in ways which are different from what was described.

As regards unloading of the granular material, as indicated that happens through an unloading opening 12 which is located on the bottom of the tubular body 2. The unloading opening 12 extends around the central body 3 and essentially is the open bottom of an annular chamber reached by all of the granular material which drops from the bottom stretch of the first helical wing 4. Therefore, the unloading opening 12 has a substantially annular shape and in particular is a hexagonal ring.

The heat exchanger 1 comprises a system for adjusting the flow of granular substance coming out of the unloading opening 12. For this purpose the heat exchanger 1 comprises a receiving plate 18, which is positioned below the unloading opening 12, and a movement device 6, which is positioned between the unloading opening 12 and the receiving plate 18.

Below the receiving plate 18 there is a hopper (or another conveying device) which receives the granular material which drops from the receiving plate 18 and, in the case of sands for glass, sends it directly to a loader for the glass furnace.

The receiving plate 18 has a central opening 180 and an outer perimetric edge 185. In a plan view the unloading opening 12 is surrounded by the outer perimetric edge 185 of the receiving plate 18 and in turn surrounds the central opening 180. Essentially, the receiving plate 18 is intended to receive the granular material which is unloaded through the unloading opening 12: the granular material builds up on the - substantially annular -face of the receiving plate 18 which is directed towards the unloading opening 12. The radial distance between the opening 180 and the outer perimetric edge 185 is selected with a value slightly greater than the minimum value sufficient to prevent the granular material 9 contained in the heat exchanger 1 from falling when the movement device 6 is stationary. For example, that value is calculated considering that the angle of repose of sand is around 50°.

The movement device 6 comprises a vane member 61 which is movable on the receiving plate 18 with a cyclical (or periodic) movement which specifically follows a circular trajectory but without rotation on an axis. The vane member 61 is configured to move the granular material 9 on the receiving plate 18, pushing it towards the outer perimetric edge 185 and/or towards the central opening 180 during that cyclical movement. Basically, the vane member 61 unloads the granular material from the receiving plate 18, making it drop towards the conveying device below. In the embodiment illustrated, the vane member 61 pushes the granular material 9 towards one side of the outer perimetric edge 185 and simultaneously towards an opposite side of the central opening 180.

By acting on the frequency of movement of the vane member 61 and if necessary on the amplitude of its movement it is possible to adjust the flow of granular material unloaded from the heat exchanger 1.

In particular, the vane member 61 is an annular structure which, in a plan view, is interposed between the central opening 180 and the outer perimetric edge 185 of the receiving plate 18.

The vane member 61 is formed by a frame, for example obtained from a section bar with inverted T shape which has been appropriately folded or divided into pieces to be welded to each other in order to create the annular structure.

The movement of the vane member 61 during the cyclical movement is a circular translating movement on the receiving plate 18.

The term "circular translating movement" of an object refers to a movement in which the barycentre of the object moves on a circle around a centre of rotation but the object itself does not rotate and instead translates in the plane along a line of translation which is continuously variable and is instantaneously tangent to a circle centred on the centre of rotation. In other words, the object follows a circular trajectory without rotation on its own axis.

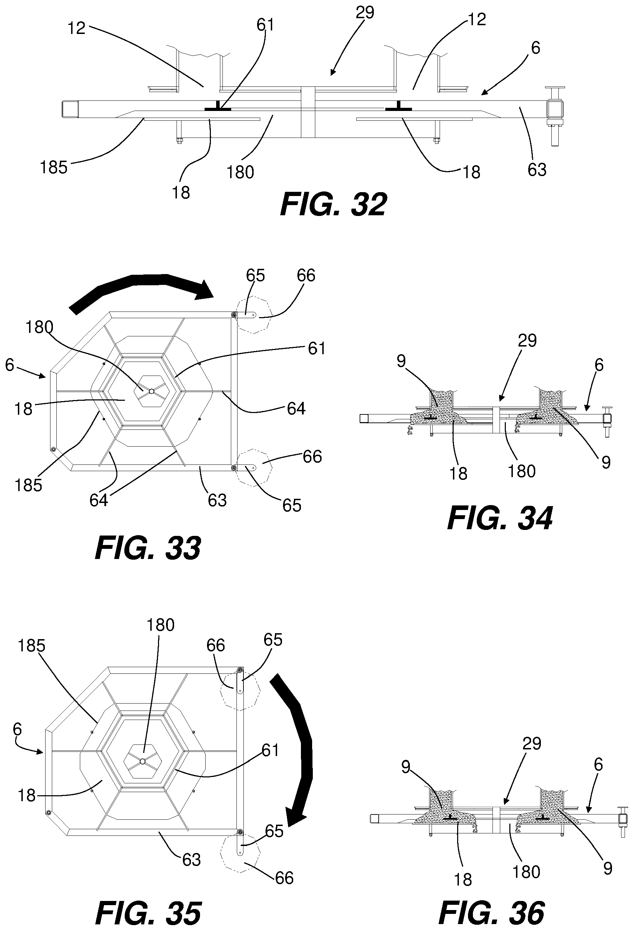

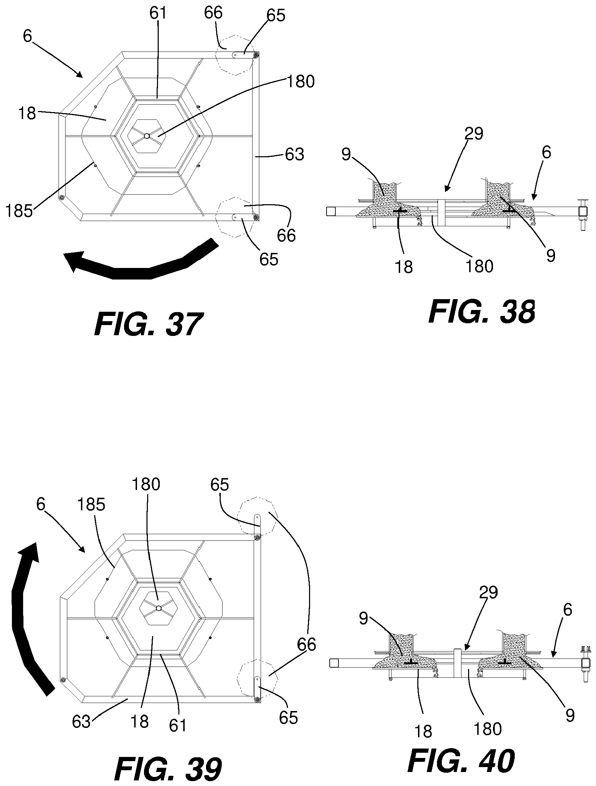

Figures 33, 35, 37 and 39 show four moments of that circular translating movement. As can also be seen from the corresponding Figures 34, 36, 38 and 40, during the movement one side of the vane member 61 moves towards a stretch of the outer perimetric edge 185, pushing the granular material towards that stretch, and simultaneously an opposite side of the vane member 61 moves towards the central opening 180, pushing the granular material towards the centre.

Thanks to the circular translating movement, the surface of the receiving plate 18 is uniformly and periodically swept by the vane member 61.

Specifically, the outer perimetric edge 185, the annular structure of the vane member 61 and also the central opening 180 have a hexagonal shape.

As regards the movement of the vane member 61, in the embodiment shown in the figures the vane member 61 is fixed to a perimetric frame 63 by connecting bars 64. The perimetric frame 63 is hinged at two points to respective cranks 65 which are driven to rotate in a synchronised way by a motor 665 which, through a transmission, drives the rotation of reduction units 66 on which the cranks 65 are respectively fitted. Basically, it is a connecting rod - crank mechanism in which the perimetric frame 63 constitutes the connecting rod. Specifically, the cranks 65 have the same length between the respective centre of rotation and the respective hinge point with the perimetric frame and also they are synchronised in such a way that they are always parallel to each other. That allows implementation of said circular translating movement for the perimetric frame 63 and the vane member 61.

For static reasons the perimetric frame 63 is hinged to a fixed support at a further point by means of a hinge 67, which in any case leaves the perimetric frame 63 the degrees of freedom necessary to perform the circular translating movement.

Basically, the movement device 6 is a system for adjusting the unloading of granular material and allows the implementation of a homogeneous flow of granular material from each sector of the unloading opening 12. That is useful for achieving residence times of the granular material in the heat exchanger 1 which are the same for any section (understood as vertical column) of the heat exchange chamber 10. The movement of the vane member 61 causes the outflow of the granular material coming out of the heat exchange chamber 10 and allows homogeneous unloading of the granular material on the whole perimeter. It shifts a volume of granular material which corresponds to the front of the T-shaped section bar (internal and external) multiplied by the stroke produced by the connecting rod - crank mechanism. The receiving plate 18 allows unloading both towards the outside and towards the central opening 180. It should be noticed that the hexagonal shape of the vane member 61, of the outer perimetric edge 185 and of the central opening 180 follow the geometry of the final part of the heat exchanger 1 (that is to say, the shape, also hexagonal, of the unloading opening 12). The flow rate of the movement device 6 may be adjusted both by acting on the speed of movement, that is to say, on the speed of the motor 665 which moves the reduction units 66 and therefore on the frequency of the circular translating movement, and by acting on the length of the cranks 65, that is to say, on the amplitude of the stroke of the vane member 61. If the movement of the movement device 6 is interrupted, the unloading flow of granular material 9 is also interrupted.

It should be noticed that the ways of unloading and the movement device 6, in conjunction with the unloading opening 12 and the receiving plate 18, could be the subject-matter of a patent application separate from the specific heat exchanger 1 described herein. In fact, they are aspects which could also be applied in other devices in which it is necessary to adjust a flow of granular material coming out of a container above.

It should be noticed that the system for adjusting the unloading (that is to say, the movement device 6) is the only moving device in the hot part of the heat exchanger 1, because the screw feeders 16 are located in contact with the granular material which has just been loaded and therefore is still cold. That constitutes an important feature in terms of reliability at high temperatures.

If necessary the tubular body 2 or the central body 3 may be equipped with a timed shaking system, for example comprising a mass which is periodically lifted and allowed to drop (with a travel of around thirty centimetres) so as to cause a sharp blow on the tubular body 2 or on the central body 3, which propagates along the whole respective helical wing 4, 5 breaking up any lumps formed in the granular material.

It should be noticed that, in the heat exchanger 1 according to this invention, thanks to the helical wings 4, 5 there is a considerable heat exchange surface area and a long path for the gaseous current. That is useful for obtaining a high heat exchange, but with a limited exchanger volume.

For example, in one embodiment, the ratio between the exchange surface area and the volume of the tubular body 2 is greater than 5 m²/m³ (referring to the volume of the exchanger 1). Considering the total volume of the cylindrical body 2 and how it is occupied during operation, the volume occupied by the granular material is 35%, the volume of the helical paths for the gaseous current is 46%, the volume of the path of the gaseous current fed in (that is to say, the inner cavity 30) is 16%, the volume of the structure hardware is 3%. These values show a very balanced ratio, indicative of the fact that there are no spaces occupied which do not play an active part in the effective operation of the heat exchanger 1. That is useful for minimising the total volume of the heat exchanger 1.

Moreover, since the tubular body 2 is substantially cylindrical, its surface area/volume ratio is low and that is useful for further reducing heat dispersion.

For example the heat exchanger 1 may be made of metal material, if necessary of special materials for the parts which are in zones with very high temperatures during operation. For example anti-wear surface treatments may be carried out or silicon carbide (SiC) plates may be used in the final part of the two helical wings 4 and 5.

One specific field of application for the heat exchanger 1 according to this invention is the glass-making sector. Therefore, this invention also relates to a glass-making plant, comprising a furnace and a heat exchanger 1. The furnace is provided with a burner for combustion of a combustible material and the combustion heat is used to melt a granular material - in particular sand - which is introduced into the furnace. The heat exchanger 1 is connected to the furnace and is a heat recovery unit for heat exchange between combustion fumes coming from the furnace and the granular material to be introduced into the furnace.

In particular, heat is recovered from the combustion fumes which are coming out of a system for pre-heating of the combustion air. The enthalpy content of the combustion fumes during this step is still capable of guaranteeing pre-heating of the sands to beyond 600°C.

Thanks to the heat exchanger 1 according to this invention, it is possible to use that enthalpy content and to reach a sand pre-heating temperature which is close to 600°C, which is a limit value for the glass industry (in fact, at this temperature the cullet present in the mixture of granular material begins to soften, consequently blocking flowing), but which may be pushed to higher levels for granular material which can reach higher temperatures. The helical wings 4, 5 may be made of material suitable for the high temperatures required.

As already indicated, the pre-heating of the sand is very important for the efficiency of a tank furnace of a glass-making plant. It is appropriate to emphasise a significant difference between the enthalpy recovered in the pre-heating of the combustion air and the enthalpy recovered in the pre-heating of the sand or other raw material.

The tank furnace may be considered a co-current exchanger, with average efficiency of 25 to 40%. The enthalpy recovered in the pre-heating of the sand should not be directly compared with that recovered in the combustion air introduced into the combustion chamber where the burner is located, but should be compared with the value corresponding to that which then effectively enters the glassy mass, in accordance with furnace efficiency.

With pre-heating of the sand up to 600°C a reduction of around 30% in fuel consumption was detected or, alternatively, an increase of around 40% in furnace production capacity. In practice, with such a pre-heating temperature the efficiency of a 50 tonnes per day furnace with recuperative system is brought to the same efficiency values as a 400 tonnes per day furnace with regenerative system. That constitutes a considerable contribution to the reduction of CO₂ emissions to air.

Therefore, the advantages which the heat exchanger 1 according to this invention can bring seem clear, in particular in the sector of glass furnaces. Given its compact dimensions and substantial operational simplicity, the heat exchanger 1 can easily be inserted in existing production plants.

The exchange apparatus according to this invention, when used for mass exchange, allows the obtainment of at least some of the advantages mentioned above relative to its use as a heat exchanger.

Finally, it should be noticed that this invention is relatively easy to produce and that even the cost linked to implementing the invention is not very high.

The invention described above may be modified and adapted in several ways without thereby departing from the scope of the inventive concept, as defined by the accompanying claims.

All details may be substituted with other technically equivalent elements and the materials used, as well as the shapes and dimensions of the various components, may vary according to requirements.

## Claims

1. An exchange apparatus (1) for heat and/or mass exchange between a granular material and a gaseous current, comprising:
- a tubular body (2) having a lateral wall (21), which extends between a top (28) and a bottom (29), and a longitudinal central axis (20);
- a central body (3) which is positioned inside the tubular body (2) and which extends along the longitudinal central axis (20);
- an exchange chamber (10) which is defined between the lateral wall (21) and the central body (3);
- a loading opening (11) for loading the granular material into the exchange chamber (10), the loading opening (11) being at the top (28) of the tubular body (2);
- an unloading opening (12) for unloading the granular material from the exchange chamber (10), the unloading opening (12) being at the bottom (29) of the tubular body (2);
- an inlet (13) for letting the gaseous current into the tubular body (2);
- an outlet (14) for letting the gaseous current out of the tubular body (2);
wherein a first helical wing (4), which is fixed to the lateral wall (21) and projects towards the central body (3), and a second helical wing (5), which is fixed to the central body (3) and projects towards the lateral wall (21), are positioned in the exchange chamber (10), the first helical wing (4) and the second helical wing (5) extending around the longitudinal central axis (20) between the top (28) and the bottom (29);
wherein the first helical wing (4) and the second helical wing (5) are inserted between each other and define at least one helical path between them, which puts the inlet (13) in communication with the outlet (14), said helical path being a helical flow path for the gaseous current in the exchange chamber (10);
wherein the first helical wing (4) has an upper face (41) which is directed towards the top (28) and is sloping down towards the central body (3), an inner edge (43) of the first helical wing (4) being at a distance from the central body (3), so that a first helical passage (45) is defined between the first helical wing (4) and the central body (3) and is delimited underneath by the second helical wing (5);
wherein the second helical wing (5) has an upper face (51) which is directed towards the top (28) and is sloping down towards the lateral wall (21), an outer edge (53) of the second helical wing (5) being at a distance from the lateral wall (21), so that a second helical passage (55) is defined between the second helical wing (5) and the lateral wall (21) and is delimited underneath by the first helical wing (4);
wherein the upper face (41) of the first helical wing (4), the first helical passage (45), the upper face (51) of the second helical wing (5) and the second helical passage (55) define a drop path for the granular material in the exchange chamber (10) between the loading opening (11) and the unloading opening (12).

2. The exchange apparatus (1) according to claim 1, wherein the central body (3) has an inner cavity (30) which is in communication with the inlet (13) for the gaseous current and has at least one transit opening (33) which puts the inner cavity (30) in communication with the exchange chamber (10).

3. The exchange apparatus (1) according to claim 2, wherein the central body (3) is a tube, the inlet (13) and the outlet (14) are at the same end of the tubular body (2), in particular at the top (28) of the tubular body (2), and said at least one transit opening (33) is at the opposite end of the tubular body (2), so that the gaseous current flows inside the central body (3) before entering the exchange chamber (10).

4. The exchange apparatus (1) according to any one of claims 1 to 3, wherein the first helical wing (4) and the second helical wing (5) have a helical shape with two starts or with more than two starts.

5. The exchange apparatus (1) according to any one of claims 1 to 4, wherein the first helical wing (4) has a lower face (42) which is provided with heat-exchange fins (47) and/or the second helical wing (5) has a lower face (52) which is provided with heat-exchange fins (57).

6. The exchange apparatus (1) according to any one of claims 1 to 5, wherein the first helical wing (4) is formed by a plurality of sectors (48) which are positioned one after another and which are fixed to the lateral wall (21),
and/or
wherein the second helical wing (5) is formed by a plurality of sectors (58) which are positioned one after another and which are fixed to the central body (3),
wherein each sector (48) of the first helical wing (4) and/or each sector (58) of the second helical wing (5) is a shaped and folded piece obtained from a sheet.

7. The exchange apparatus (1) according to claim 6, wherein the lateral wall (21) has an inner surface which is facing the exchange chamber (10), said inner surface of the lateral wall (21) being prismatic and, in cross-section, having a polygonal shape comprising a plurality of sides, wherein each sector (48) of the first helical wing (4) has a folded flap (49) which is fitted on a respective side of the inner surface of the lateral wall (21),
and/or
wherein the central body (3) has an outer surface which is facing the exchange chamber (10), said outer surface of the central body (3) being prismatic and, in cross-section, having a polygonal shape comprising a plurality of sides, wherein each sector (58) of the second helical wing (5) has a folded flap (59) which is fitted on a respective side of the outer surface of the central body (3).

8. The exchange apparatus (1) according to any one of claims 1 to 7, wherein the unloading opening (12) for unloading granular material from the exchange chamber (10) has a substantially annular shape,
the exchange apparatus (1) comprising a receiving plate (18) which is positioned below the unloading opening (12) and a movement device (6) which is positioned between the unloading opening (12) and the receiving plate (18),
the receiving plate (18) having an outer perimetric edge (185) and a central opening (180), wherein in a plan view the unloading opening (12) is surrounded by the outer perimetric edge (185) and surrounds the central opening (180), the receiving plate (18) being intended to receive the granular material which is unloaded through the unloading opening (12),
the movement device (6) comprising a vane member (61) which is movable on the receiving plate (18) with a cyclical or periodic movement and which is configured to move the granular material on the receiving plate (18), pushing the granular material towards the outer perimetric edge (185) and/or towards the central opening (180) during that periodic movement.

9. The exchange apparatus (1) according to claim 8, wherein the vane member (61) is an annular structure which, in a plan view, is interposed between the central opening (180) and the outer perimetric edge (185) of the receiving plate (18) and which, during the cyclical or periodic movement, performs a circular translating movement on the receiving plate (18).

10. A glass-making plant, comprising a furnace and a heat exchanger which is an exchange apparatus (1) according to any one of claims 1 to 9, wherein the furnace is provided with a burner for combustion of a combustible material, the combustion heat being used to melt a granular material, in particular sand, which is introduced into the furnace,
wherein the heat exchanger is connected to the furnace and is a heat recovery unit for heat exchange between combustion fumes coming from the furnace and the granular material to be introduced into the furnace.
